# EUROPEAN PATENT SPECIFICATION

(11) **EP 0 441 650 B1**
(45) Date of publication and mention of the grant of the patent: **26.10.1994**
(21) Application number: 91301044.3
(22) Date of filing: 08.02.1991
(51) Int. Cl.: G05B 19/04

(54) **Fusion control unit**
Schmelz-Kontrolleinheit
Unité de contrôle de fusion

(30) Priority: 08.02.1990 GB 9002810
(43) Date of publication of application: 14.08.1991
(73) Proprietor: UPONOR BV, 5340 AT Oss (NL)
(72) Inventor: Page, Ralph, Sale, Cheshire (GB); Reeves, Anthony Vincent, Selston, Notts. NG16 6FN (GB)
(74) Representative: Hall, Robert Leonard

(56) References cited:
- EP-A- 0 034 859
- EP-A- 0 353 912
- DE-A- 2 452 534
- GB-A- 2 202 973

## Description

This invention relates to Fusion Control Units particularly for use in the control of the fusion or welding current applied to heater wires contained in plastic fittings such as pipe fittings.

It is common to join lengths of pipe together by means of tubular fittings, the fittings containing an electrical heater wire wound internally in the tubular fitting and adapted, when heated, to cause the adjacent plastic material to melt and to fuse with the material of the pipes to be joined.

The application of this principle is also used on saddles which are joined to pipes in order to provide an entry into a pipe at an angle, usually a right-angle, and in this case the heater wire is often incorporated in a disc of annular form which is curved to accommodate the curve of the saddle.

Different kinds of heater wire are used in different fittings. In general low resistance wires made of copper and copper alloys are used and high resistance wires made of aluminium and aluminium alloys are used in other applications. It is important to be able to distinguish between these different types of windings and in order to do so not only the ohmic resistance but also the inductance has to be measured.

Having ascertained the type of heater winding and its ohmic resistance and/or inductance, it is then possible to apply the appropriate current to the fitting which is being employed under a controlled regime.

This regime may be controlled, as in the present invention, by use of a computer or microprocessor which may also carry out other functions. For example, the computer or microprocessor may record the type of fitting which is being used, the period for which current was applied, the strength of the current and so on.

Originally, the appropriate current was simply applied to a fitting, after which the fusion control unit could be moved to another fitting. The introduction of a computer or microprocessor provides both control of the regime for application of current and the possibility of storage of data relevant to each fusion operation, for example, which can be retrieved at a later date if required. Furthermore, if two-way transmission is provided, the computer or microprocessor can be re-programmed to alter parameters as necessary.

EP-A-0353912 discloses a fusion control unit equipped with a transmitter receiver for interrogating an information containing element provided in the body of a pipe fitting. The fusion control unit contains the transmitter receiver and supplies an interrogating signal in the form of an RF signal via a lead to antennae.

All of these functions may be carried out by the fusion control unit of this invention but the main object of the present invention is to provide a fusion control unit in which the programme set up in the computer or microprocessor may be varied and/or information contained in the computer or microprocessor may be extracted, without the need to get inside the casing of the fusion control unit and without the need for any electrical or mechanical connections passing through the wall of the control unit.

One advantage of this is that the unit may be totally sealed and made water and pressure proof and does not have to be disturbed in order to be reprogrammed or in order to extract information from the computer or microprocessor.

Fusion control units are generally used in the field to join either new or replacement lengths of pipe, for example water or gas pipes. It is important to provide a watertight unit for use in the field. In addition, when replacing gas pipes, it is important to prevent ingress of gas.

Thus in accordance with the present invention there is provided a fusion control unit comprised within a casing containing means to apply fusion welding current to an electric heater wire in a plastic fitting, under the control of a computer or microprocessor contained in the unit, characterised by means, within the casing, to enable information to be extracted from the computer or microprocessor, or to enable the reprogramming of the computer or microprocessor, without the need to gain access to the inside of the unit and without the use of electrical or other connectors passing through the casing of the unit.

Preferably the means within the casing comprises infra-red transmitter and receiver devices coupled through amplifiers and through a serial or parallel communication interface to the computer or microprocessor and adapted to cooperate with an external optical communication box.

The optical communication box may comprise infra-red transmitter and receiver devices connected through amplifiers to a serial or parallel communication interface connector.

Preferably the casing of the control unit has a wall made of the material which offers low impedance to transmission of infra-red radiation and said means within the casing is preferably located adjacent to said wall. Any wall of the casing may be used, provided it is of low impedance.

Thus in use the optical communications box may be brought up to the low impedance wall of the casing and held or clamped opposite to the internal means adapted to receive the infra-red radiation which may contain digitally encoded information which may be a new programme code or may set up new parameters or may contain information to be stored and transmitted into the unit. Alternatively the unit may be arranged to transmit from the microprocessor or computer through the infra-red arrangements to the external optical communication box or interface.

There may be additional devices in parallel with the infra-red transmitter and receiver devices to provide faster data interchange and high noise immunity.

The additional devices may be in parallel with the transmitter and receiver devices in both the control unit and the optical communications box.

The additional devices may comprise, in parallel with each original amplifier and transmitter, an inverting transmitter and an additional transmitter; and in parallel with each original receiver and additional receiver feeding into a differential amplifier which also receives the output of the original receiver.

Alternatively, the means within the casing may comprise a Hall effect transducer and an electromagnetic transducer adapted to cooperate with a corresponding transducer and receiver in an external communications box.

In the accompanying drawings:
Figure 1 is a perspective front view of the fusion control unit embodying the present invention and shows the external connections necessary to provide power to the box and to connect to the heater wire of the fusion sleeve or saddle.
Figure 2 is an enlarged front elevation of the front panel only of the box, shown somewhat diagrammatically, but illustrating how the information panels and indicator lights etc. are arranged.

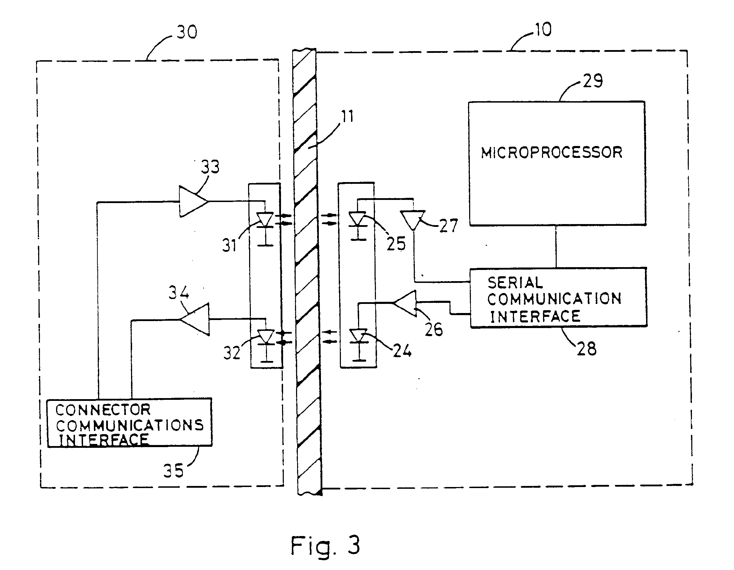

Figure 3 is a block diagram illustrating in simple terms the internal and external means used for transmitting information into and out of the microprocessor.
Figure 4 is a block diagram of an alternative embodiment for transmitting information into and out of the microprocessor.

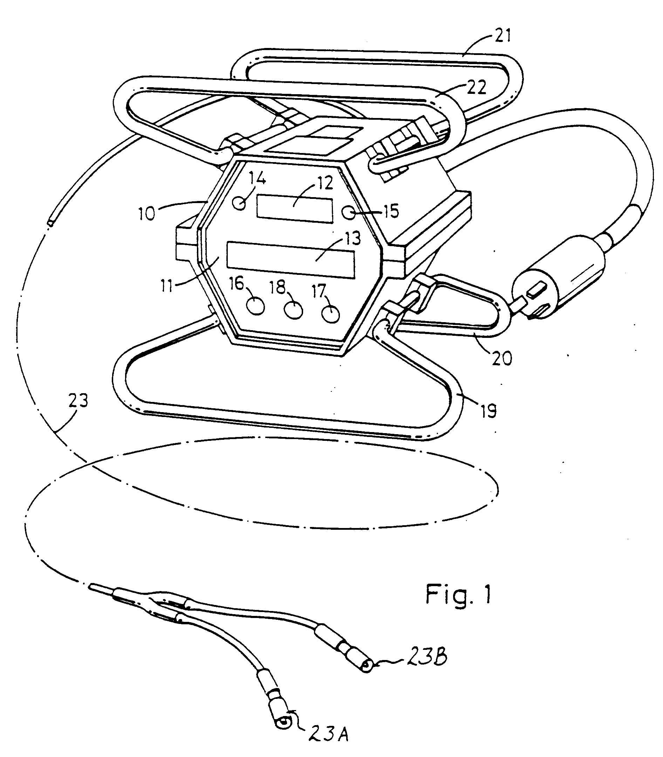

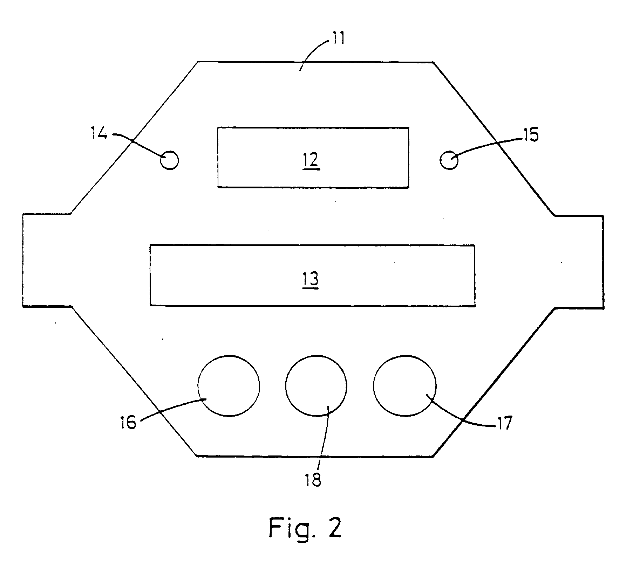

In Figure 1 the fusion control unit is shown which comprises a casing 10 which has a front panel 11 made of a plastic material which offers low impedance to transmission of infra-red signals. Within the casing is a microprocessor and the microprocessor is arranged to display fusion information in its display panel 12 and operator instructions in a display panel 13. These display panels are shown more clearly in Figure 2. There are high intensity LED's 14 and 15, No. 14 being red and intended to show when the heater is on and No. 15 being green and intended to show when the fusion is complete.

There is an ON button 16 and OFF button 17 and a green button 18 which is pressed to start the fusion process.

The casing of the unit is completely sealed against water and can stand high pressures and is made of a material highly resistance to corrosion. The casing rests on legs 19 and 20 and also has an upper pair or carrying handles 21 and 22 which may also be used as legs if the unit is placed upside down.

The unit may be connected to an electro-fusion sleeve or saddle via a cable 23 which has connectors 23A and 23B to be connected to the ends of the heater wire contained in the fusion sleeve or saddle. Within the fusion control box and adjacent the front panel 11 are located an infra-red transmitter 24 and an infra-red receiver 25 connected through respective amplifiers 26 and 27 to a serial communication interface 28 in turn connected to the microprocessor 29.

The external optical interface is provided by an optical communication box 30 containing an infra-red transmitter 31 and an infra-red receiver 32 connected through respective amplifiers 33 and 34 to a standard serial communications interface connector 35.

By connecting the serial communications interface connector to a suitable computer, instructions or information may be fed into or extracted from the electro-fusion control box. For example, information stored within the box as to previous operations may be extracted or, if required, parameters under which the unit operates may be changed or again the whole programme incorporated in the microprocessor may be changed. All this may be done without any need to enter the electro-fusion control box. The invention also obviates the need to have electrical or mechanical connectors passing through the walls of the control box and thus preserves the integrity of the box.

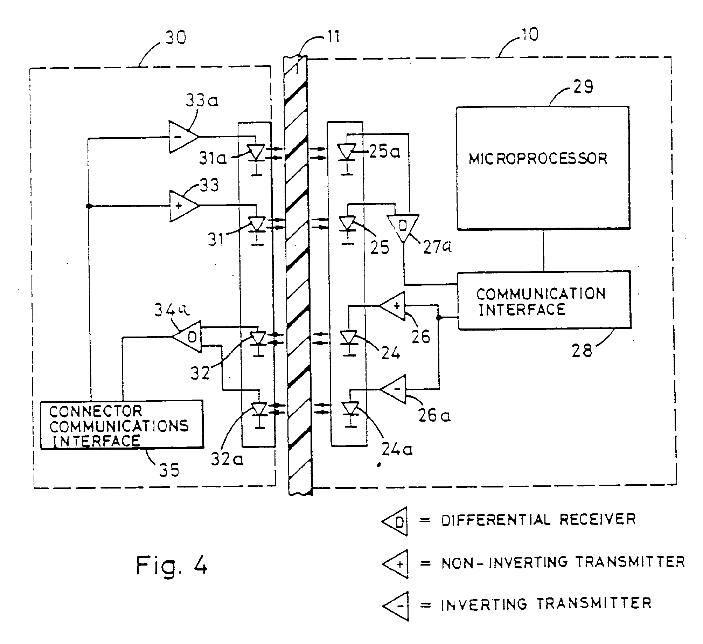

In Figure 4 is shown an alternative circuit arrangement incorporating additional devices in parallel with the infra-red transmitter and receiver devices to provide data interchange and high noise immunity.

Thus, in parallel with amplifier or non-inverting transmitter 33 and infra-red transmitter 31 there is an inverting transmitter 33a and an additional infra-red transmitter 31a.

Also in parallel with original amplifier or non-inverting transmitter 26 and transmitter 24 there is an inverting transmitter 26a and an infra-red transmitter 24a. Receiver 32 has a parallel receiver 32a and the two receivers 32, 32a feed into a common differential receiver 34a. Similarly receiver 25 has a parallel receiver 25a and the two receivers 25, 25a feed into a common differential receiver 27a.

The advantages of the modified circuit shown in Figure 4 are (a) the circuit operates faster, since devices do not need to be turned on or off so hard, (b) there is greater noise immunity to external conditions, since "noise" or increase in background radiation within range will be applied simultaneously to both receivers, which is nullified by the differential receiver.

## Claims

1. A fusion control unit comprised within a casing containing means to apply fusion welding current to an electrical heater wire in a plastic fitting under the control of a computer or microprocessor contained in the unit, characterised by means within the casing to enable information to be extracted from the computer or microprocessor, or to enable the reprogramming of the computer or microprocessor without the need to gain access to the inside of the unit and without use of electrical or other connectors passing through the casing of the unit.

2. A fusion control unit according to claim 1 and in which the means within the casing comprises infra-red transmitter and receiver devices coupled through amplifiers and a serial communication interface to the computer or microprocessor and adapted to cooperate with an external optical communications box.

3. A fusion control unit according to claim 2 and in which the optical communications box includes infra-red transmitter and receiver devices connected through amplifiers to a serial or parallel communication interface connector.

4. A fusion control unit according to claim 2 or 3 and in which there are additional devices in parallel with the infra-red transmitter and receiver devices to provide faster data interchange and high noise immunity.

5. A fusion control unit according to claim 4 and in which the additional devices are in parallel with the transmitter and receiver devices in both the control unit and the optical communications box.

6. A fusion control unit according to claim 4 or claim 5 and in which the additional devices comprise, in parallel with each original amplifier and transmitter, an inverting transmitter and an additional transmitter; and in parallel with each original receiver and additional receiver feeding into a differential amplifier which also receives the output of the original receiver.

7. A fusion control unit according to any of claims 1-3 and in which the casing has a wall made of a material offering low impedance to transmission of infra-red radiation and said means within the casing is located adjacent said wall.

8. A fusion control unit according to claim 1 and in which the means within the casing comprises a Hall effect transducer and an electromagnetic transducer adapted to cooperate with a corresponding transducer and receiver in an external communications box.

## Patentansprüche

1. In einem Gehäuse enthaltene Schmelz-Steuereinheit mit Mitteln zur Zuführung von Schmelzschweißstrom zu einem in einem Kunststoffverbindungsstück befindlichen elektrischen Heizdraht unter Steuerung durch einen in der Einheit enthaltenen Computer oder Mikroprozessor, **gekennzeichnet durch** im Gehäuse vorgesehene Mittel, die eine Abfrage von Informationen aus dem Computer oder Mikroprozessor oder eine erneute Programmierung des Computers oder Mikroprozessors gestatten, ohne daß ein Zutritt in das Innere der Einheit erforderlich ist und ohne Verwendung elektrischer oder anderer durch das Gehäuse der Einheit hindurch verlaufender Anschlüsse.

2. Schmelz-Steuereinheit nach Anspruch 1, bei der die im Gehäuse befindlichen Mittel Infrarotsende- und -Empfangsgeräte unfassen, die über Verstärker und eine serielle Kommunikationsschnittstelle an den Computer oder Mikroprozessor angeschlossen und für ein Zusammenwirken mit einer externen optischen Kommunikationseinheit ausgebildet sind.

3. Schmelz-Steuereinheit nach Anspruch 2, bei der die optische Kommunikationseinheit Infrarotsende- und -Empfangsgeräte umfaßt, die über Verstärker mit einem seriellen oder parallelen Kommunikationsschnittstellenstecker verbunden sind.

4. Schmelz-Steuereinheit nach Anspruch 2 oder 3, bei der zum schnelleren Datenaustausch und zur hohen Störfestigkeit zusätzliche Geräte parallel zu den Infrarotsende- und -Empfangsgeräten geschaltet sind.

5. Schmelz-Steuereinheit nach Anspruch 4, bei der die zusätzlichen Geräte sowohl in der Steuereinheit, als auch in der optischen Kommunikationseinheit parallel zu den Infrarotsende- und -Empfangsgeräten geschaltet sind.

6. Schmelz-Steuereinheit nach Anspruch 4 oder 5, bei der die zusätzlichen Geräte parallel zu jedem ursprünglichen Verstärker und Sender einen invertierenden Übertrager und einen zusätzlichen Übertrager sowie parallel zu jedem ursprünglichen Empfänger einen zusätzlichen Empfänger aufweisen, der an einen Differenzverstärker angeschlossen ist, der auch das Ausgangssignal des ursprünglichen Empfängers aufnimmt.

7. Schmelz-Steuereinheit nach einem der Ansprüche 1 bis 3, bei der das Gehäuse eine Wand aus einem Material mit geringen Transmissionsverlusten für Infrarotstrahlung aufweist und die im Gehäuse befindlichen Mittel an diese Wand angrenzend angeordnet sind.

8. Schmelz-Steuereinheit nach Anspruch 1, bei der die im Gehäuse befindlichen Mittel einen Halleffekt-Meßwandler und einen elektromagnetischen Meßwandler umfassen, die für ein Zusammenwirken mit einem zugehörigen Meßwandler und Empfänger in einer externen Kommunikationseinheit angepaßt sind.

## Revendications

1. Appareil de commande de fusion compris à l'intérieur d'un carter contenant des moyens pour appliquer un courant de soudage par fusion à un fil électrique chauffant inclus dans une pièce en matière plastique sous la commande d'un ordinateur ou d'un microprocesseur contenu dans l'appareil, caractérisé par des moyens contenus dans le carter et destinés à permettre d'extraire des informations de l'ordinateur ou du microprocesseur, ou à permettre la reprogrammation de l'ordinateur ou du microprocesseur sans avoir à accéder à l'intérieur de l'appareil et sans avoir à utiliser des connecteurs électriques ou autres traversant le carter de l'appareil.

2. Appareil de commande de fusion selon la revendication 1 et dans lequel les moyens contenus à l'intérieur du carter comprennent des dispositifs de transmission et de réception infra-rouge reliés à l'ordinateur ou au microprocesseur par l'intermédiaire d'amplificateurs ou d'une interface de communication série, et lesdits moyens étant adaptés pour coopérer avec une boîte de communication optique extérieure.

3. Appareil de commande de fusion selon la revendication 2 et dans lequel la boîte de communication optique comprend des dispositifs de transmission et de réception infra-rouges reliés à un connecteur d'interface de communication série ou parallèle par l'intermédiaire d'amplificateurs.

4. Appareil de commande de fusion selon la revendication 2 ou 3 et dans lequel sont disposés des dispositifs supplémentaires en paralléle avec les dispositifs de transmission et de réception infra-rouges pour permettre un échange de données plus rapide et une protection au bruit plus importante.

5. Appareil de commande de fusion selon la revendication 4 et dans lequel les dispositifs supplémentaires sont en parallèle avec les dispositifs de transmission et de réception à la fois dans l'appareil de commande et dans la boîte de communication optique.

6. Appareil de commande de fusion selon la revendication 4 ou 5 et dans lequel les dispositifs supplémentaires comprennent, en parallèle avec chacun des dispositifs amplificateurs et de transmission originaux, un dispositif de transmission inverseur et un dispositif de transmission supplémentaire; et en parallèle avec chaque dispositif récepteur original, un dispositif récepteur supplémentaire alimentant un amplificateur différentiel qui reçoit aussi la sortie du dispositif récepteur original.

7. Appareil de commande de fusion selon l'une quelconque des revendications 1 à 3 et dans lequel le carter a une paroi réalisée en un matériau montrant une faible impédance à la transmission de radiations infra-rouges et lesdits moyens contenus à l'intérieur du carter sont situés au voisinage de cette paroi.

8. Appareil de commande de fusion selon la revendication 1 et dans lequel les moyens contenus à l'intérieur du carter comprennent un transducteur à effet de Hall et un transducteur électromagnétique adaptés pour coopérer avec un transducteur et un récepteur correspondants situés dans une boîte de communication externe.
